# EUROPÄISCHE PATENTSCHRIFT

(11) **EP 2 054 458 B1**
(45) Veröffentlichungstag und Bekanntmachung des Hinweises auf die Patenterteilung: **30.05.2012**
(21) Anmeldenummer: 07818741.6
(22) Anmeldetag: 05.10.2007
(51) Int. Cl.: C08G 18/62, C08L 75/16, C08L 33/12

(54) **RADIKALISCHE KALTHÄRTUNG VON AUF MODIFIZIERTEN POLY(METH)ACRYLATEN MIT REAKTIVEN ETHYLENISCHEN GRUPPEN BASIERENDEN KUNSTHARZEN**
RADICAL COLD-CURING OF SYNTHETIC RESINS BASED ON MODIFIED POLY(METH)ACRYLATES COMPRISING REACTIVE ETHYLENIC GROUPS
DURCISSEMENT RADICALAIRE À FROID DE RÉSINES SYNTHÉTIQUES À BASE DE POLY(MÉTH)ACRYLATES MODIFIÉS COMPORTANT DES GROUPES ÉTHYLÉNIQUES RÉACTIFS

(30) Priorität: 09.10.2006 DE 102006047687; 23.03.2007 DE 102007014122
(43) Veröffentlichungstag der Anmeldung: 06.05.2009
(73) Patentinhaber: Ashland-Südchemie-Kernfest GmbH, 42489 Wülfrath (DE)
(72) Erfinder: KUHLMANN, Peter, 42489 Wülfrath (DE); LERSCHMACHER, Andreas, 40597 Düsseldorf (DE); HOCK, Klaus, 94209 Regen (DE)
(74) Vertreter: Stolmár, Matthias
(86) Internationale Anmeldenummer: PCT/EP2007/008665
(87) Internationale Veröffentlichungsnummer: WO 2008/043486

(56) Entgegenhaltungen:
- DE-A- 2 006 197
- DE-A-102005 004 639
- US-A- 3 689 593
- US-E- R E35 280

## Beschreibung

### Gebiet der Erfindung

Die vorliegende Erfindung betrifft die radikalische Kalthärtung von auf Poly(meth)acrylat-urethan-(meth)acrylaten in Urethan(meth)-acrylaten und gegebenenfalls (Meth)acrylaten und/oder Reaktivverdünnern basierenden Kunstharzen unter Einsatz geeigneter Zusatzstoffe, sowie die Verwendung dieser radikalisch kalthärtbaren Kunstharze als Bindemittel in radikalisch kalthärtbaren Gemischen, als auch die aus diesen Gemischen durch radikalische Kalthärtung erhaltenen organischen Kunstgläser / -stoffe, Kunstglas- / Kunststoffwerkstücke und Kompositwerkstoffe und -werkstücke, sowie die Herstellung und Verwendung dieser Gemische, organischen Kunstgläser / -stoffe, Kunstglas- / Kunststoffwerkstücke und Kompositwerkstoffe und - werkstücke selbst.

Die Kalthärtung zeichnet sich hierbei insbesondere dadurch aus, dass die Anwesenheit basischer Füllstoffe im zu härtenden Gemisch bei dieser nicht zwingend erforderlich ist und gleichzeitig die über sie erhaltenen, gehärteten Produkte lichtecht, farblos und je nach Härter-Kombination zusätzlich transparent sind.

### Stand der Technik

Acrylgläser sind organische Kunstgläser aus Polymethacrylaten (Polymerisationsprodukte der Methacrylsäureester).
Plexiglas^{®}, ein harter, biegsamer, thermoplastischer, glasartig durchsichtiger, farbloser oder eingefärbter Kunststoff aus Polymethylmethacrylat (PMMA), ist das bekannteste Acrylglas mit einer Lichtdurchlässigkeit bis zu 93 %, durchlässig für Ultraviolett- und Röntgenstrahlen.

Es ist verformbar (bei 140 bis 160°C), polierbar, schneidbar, schleifbar, schweißbar und kann gedreht, gesägt, gestanzt, gefeilt, gebohrt und mit Polyacrylat und Polymethacrylat-Klebstoffen geklebt werden.

Die maximale Gebrauchstemperatur liegt im Falle einer Dauerbelastung bei ungefähr 65 bis 90 °C, bei kurzzeitiger Belastung bei ungefähr 85 bis 100 °C.

Es ist beständig gegen Wasser, Laugen, verdünnte Säuren, Benzin, Mineralöl, Terpentinöl, dagegen wird es zum Beispiel durch Alkohol, Ester, Ketone, Chlorkohlenwasserstoffe und Benzol zur Quellung bzw. Lösung gebracht.

Zur Reinigung von Plexiglas^{®} verwendet man Wasser und Spülmittel, einen weichen Viskoseschwamm und ein Polier- und Trockentuch, keine Mineralpulver (Verkratzungsgefahr, denn Plexiglas^{®} ist empfindlicher als Glas), keine Fleckenwässer und dergleichen (Auflösungsgefahr).

Acrylglas wird durch Substanz- und Perlpolymerisation und Extrusion oder Spritzguss in Form von Tafeln, Rohren, Stäben, Blöcken hergestellt.

Das älteste Verfahren zur Substanzpolymerisation ist das Kammerverfahren zur Herstellung von Plexiglas^{®}-Platten.

Bei diesem Verfahren wird ein Vorpolymerisat (viskoses Gemisch aus Monomer und Polymer mit einem Anteil von bis zu 25 % PMMA) zusammen mit Initiator (zumeist Peroxide wie Benzoyl- oder Laurylperoxid, aber auch zum Beispiel Azoisobutyronitril oder die Kombination Peroxosulfate / Bisulfit) und eventuell andere Zusätze, wie z.B. Vernetzer und Comonomere in eine Flachkammer gegossen, die aus zwei Silicatglasscheiben mit einer kompressiblen Dichtschnur besteht.

Der Einsatz von vorpolymerisiertem Material verringert hierbei die Schrumpfung, vermindert die Wärmeentwicklung bei der weiteren Polymerisation und verkürzt die Reaktionszeit.

Die radikalische Polymerisation verläuft dann im Wärmeschrank zunächst bei 20-60 °C und wird bei 100-130 °C vollendet.

Dabei kommt es zu einem Volumenschwund von bis zu 20 %, der durch Zusammenpressen der Platten ausgeglichen wird, so dass Spannungen vermieden werden. Nach dem Prozess lassen sich die Polymethylmethacrylat-Platten leicht von den Glasscheiben trennen.

Die Einsatzmöglichkeiten von Acrylglas sind sehr vielseitig, so kann es unter anderem dank der hervorragenden Bruchsicherheit und Witterungsbeständigkeit für Sicherheitsglas-scheiben, die Verglasung von Flugzeugen, Omnibussen und Dächern verwendet werden, unter anderem dank der ausgezeichneten optischen Eigenschaften und guten mechanischen Bearbeitbarkeit für leichtgewichtige Lupen, Prismen, Linsen und lichtleitende Fasern, unter anderem dank der guten UV-Beständigkeit in Solarien, unter anderem dank der guten Verformbarkeit für Uhrgläser oder Schutzverkleidung für Maschinen und unter anderem dank der Geruchs- und Geschmacksneutralität für Rohre in der Getränkeindustrie.

Auch für Sanitärbauteile wie Badewannen, Duschtassen und Waschbecken kommt es mit einer kratzfesten Beschichtung auf Siliconharzbasis in Frage, ebenso wie zum Beispiel für sanitäre Einrichtungen und Behälter im Allgemeinen, Raumleuchten, Instrumente, gewellte Platten im Bauwesen, transparente Lärmschutzwände, Büroartikel, Zeichengeräte (Geodreiecke, Ablagen und ähnliches), Möbel, Bilderrahmen und vieles mehr.

Im Gegensatz zu einem Werkstoff wie Acrylglas sind Verbund- bzw. Kompositwerkstoffe solche, die durch Kombination unterschiedlicher Materialien erhalten werden und deren chemische und physikalische Eigenschaften die der Einzelkomponenten übertreffen.

Einsatz finden sie z.B. im Bauwesen, in der Technik (im Fahrzeugbau, in der Luft- und Raumfahrt, in der Elektrotechnik und Elektronik, im Maschinen- und Werkzeugbau etc.) und in der Medizin.

Dererlei Kompositwerkstoffe können wie Acrylglas auch auf Acrylat basieren.

Viele entsprechende, mit Füllstoffen versehene Polymermassen für Fussbodenplatten, Platten für kosmetische Artikel in Badezimmern sowie Schalen und andere Bauzwecke sind bekannt.

Zum Beispiel beschreibt das US-Patent 3,847,865 Erzeugnisse aus Marmorimitation, die US-Patente 3,324,074 und 3,663,493 Acrylpolymere mit anorganischen Füllstoffteilchen, die sich zur Herstellung von Form- und Gusskörpern, wie Tischplatten eignen und das US-Patent 4,085246 Granitimitationen und ihre Herstellung.

Kommerzielle, Acrylat-basierende Produkte sind beispielsweise das mit Aluminiumtrihydroxid (ATH) gefüllte Corian^{®} der Firma E.I. du Pont de Nemours and Company, das ATH-gefüllte Cristalan^{®} der Schock & Co. GmbH, sowie deren Quarzhaltiges Cristalite^{®}.

In der DE-Patentanmeldung 10 2005 004 639.8 der Ashland-Südchemie-Kernfest GmbH finden erstmalig radikalisch härtbare Kunstharze bestehend aus Poly(meth)acrylat-urethan-acrylaten in Urethanacrylaten und gegebenenfalls Reaktivverdünnern und/oder (Meth)acrylaten, deren Herstellung ausgehend von Lösungen multifunktioneller Poly(meth)acrylate und deren Verwendung als Bindemittel in radikalisch härtbaren Stoffgemischen, als auch die aus diesen Gemischen erhaltenen Kompositwerkstoffe und Werkstücke, sowie die Herstellung und Verwendung dieser Stoffgemische, Kompositwerkstoffe und -werkstücke selbst Erwähnung.

Gemäß Patentanmeldung müssen diese Stoffgemische zwecks Herstellung eines Kompositwerkstoffes bzw. -werkstückes in Anwesenheit eines oder mehrerer Radikal-kettenstarter unter Druck erwärmt werden, zum Beispiel nach Beschickung einer Form mit Heißdampf über vorzugsweise 20 bis 30 min. bei einem Druck von vorzugsweise 3 bis 4 bar auf vorzugsweise 70 bis 130 °C.

Nach erfolgter Aushärtung kann der Kompositwerkstoff bzw. das entsprechende Werkstück dann der Form entnommen werden und weiter verarbeitet werden.

Die so durch Heißhärtung erhaltenen Kompositwerkstoffe und - stücke heben sich bezüglich ihrer anwendungstechnischen Eigenschaften positiv vom Stand der Technik ab.

Unter anderem resultiert aus dem Einsatz eines vorvernetzen Systems, das zudem dreidimensional weiter vernetzt, ein geringerer Schrumpf sowie eine geringere Emission an Monomer wie zum Beispiel Methylmethacrylat (MMA).
Ersteres bedingt die Eliminierung oder doch zumindest die Reduzierung der Anzahl und Größe von Rissen und Lunkern, letzteres die der Anzahl und Größe von Blasen und Poren. Auf das Verfahren der Kalthärtung wird in diesem Patent nicht eingegangen.

Im Patent US Re. 35,280 der Imperial Chemical Industries PLC hingegen ist die Kalthärtung von ungesättigten Urethanmonomeren-Lösungen, die den in der DE-Patentanmeldung 10 2005 004 639.8 erwähnten Kunstharzen chemisch verwandt sind, beschrieben.

Ober die dort beschriebene Kalthärtung sind jedoch keine farblosen und lichtechten Produkte darstellbar.Zum einen sind die dort beschriebenen Lösungen selbst bereits braun gefärbt.Zum anderen findet eine Kombination aus Benzoylperoxid und N,N-Dimethyl-p-toluidin zwecks Katalyse der radikalischen Polymerisation ihren Einsatz.

Ein solches Härtungssystem, d.h. Benzoylperoxid in Kombination mit einem aromatischen Aminbeschleuniger, wird standardmäßig von namhaften Peroxidherstellern wie der Pergan GmbH oder der Akzo Nobel Polymer Chemicals BV für die Kalthärtung von Acrylharzen empfohlen und bedingt grundsätzlich eine schnelle Härtung bei Raumtemperatur, die kaum durch Feuchtigkeit und Füllstoffe beeinflusst wird, aber meistens auch eine Gelbfärbung und geringe Lichtechtheit des gehärteten Endproduktes. Hierbei macht sich die geringe Lichtechtheit in Form einer zusätzlichen Vergilbung bemerkbar.

Anders verhält es sich bei Einsatz von tert.-Butylperoxymaleinsäure, die ebenfalls zur Kalthärtung von Acrylharzen von namhaften Peroxidherstellern empfohlen wird.

In Anwesenheit einer geeigneten Kombination aus einem Mercaptan und einer wässerigen, alkalischen Lösung wird ebenfalls eine schnelle Härtung bei Raumtemperatur erreicht, wobei sich das Endprodukt nicht nur durch einen vergleichsweise geringen Restmonomerengehalt auszeichnet, sondern eben auch dadurch, dass es keine Gelbfärbung und mangelhafte Lichtechtheit aufweist.

Nachteilig ist lediglich, dass man im Endprodukt Trübungen beobachtet, was aus dem Einsatz der wässerigen, alkalischen Lösung resultiert.

Jedoch ist in der Literatur kein Beispiel für die Kalthärtung von füllstofffreien Acrylat-basierenden Mischungen oder von solchen Acrylat-basierenden Stoffgemischen, die zumindest frei von basischen Füllstoffen sind, mittels tert.-Butylperoxymaleinsäure beschrieben.

Ist die Kalthärtung von Stoffgemischen mittels tert.-Butylperoxymaleinsäure zwecks Herstellung eines Kompositwerkstoffes oder eines - werkstückes beschrieben, finden notwendigerweise basische Füllstoffe wie Aluminiumtrihydroxid (ATH) oder Calciumcarbonat ihren Einsatz.

So auch im Patent WO 02/068519 A2 der E.I. du Pont de Nemours and Company, wo basische Mikrokugeln (3M^{™} Zeeospheres^{™} White Microspheres W-410) verwendet werden.

Bei der Kalthärtung von Stoffgemischen basierend auf Acrylatharz und besagten keramischen Mikrokugeln findet dort unter Erhalt von Kompositwerkstoffen zusammen mit tert.-Butylperoxymaleinsäure ein Gemisch aus demineralisiertem Wasser, einer Calciumhydroxid-Dispersion und Glycoldimercaptoacetat (GDMA) als Beschleuniger-Kombination, die der Aktivierung der radikalischen Kettenreaktion dient (siehe hierzu auch die Offenlegungsschrift DE 20 06 197 der E.I. du Pont de Nemours and Company), seinen Einsatz.

Das mit dieser Beschleuniger-Kombination aktivierte Stoffgemisch erreicht ausgehend von 28°C binnen Minuten maximale Temperaturen im Bereich von ungefähr 130 bis 160 °C.

Bei der ebenfalls im Patent WO 02/068519 A2 beschriebenen Heißhärtung derartiger Stoffgemische finden t-Butyl-peroxyneodecanoate und 2,2'-Azodi(2-methylbutyronitril) als Radikalkettenstarter Verwendung.

Die Aktivierung erfolgt durch Erwärmen auf 80 °C. Ebenfalls binnen Minuten (hier nach dem Erwärmen) erreicht das Stoffgemisch maximale Temperaturen im Bereich von ungefähr 100 °C bis 160 °C. Im Gegensatz zur Kalthärtung muss bei diesem Verfahren allerdings noch einmal bei 120°C nachgehärtet werden.

Grundsätzlich gilt, dass die Kalthärtung der Heißhärtung vorzuziehen ist, da sie energie- und zeitsparend, und somit letztlich auch kostensparend ist. Energiesparend insofern, als dass keinerlei Wärmezufuhr erforderlich ist. Dieses schont nicht nur natürliche Resourcen, sondern spart eben auch Kosten. Aber nicht nur, weil keine Kosten für die Energie selbst entstehen. Da eine Wärmezufuhr überflüssig ist, muss nämlich nicht unter Druck gearbeitet werden, der bei der Heißhärtung erforderlich ist, um Emissionen zu vermeiden und um einem ungleichmäßigem Schrumpf entgegenzuwirken.

Wird aber sowohl auf die Wärmezufuhr, als auch auf Druck verzichtet, ist der Einsatz teurer Werkzeuge und Formen nicht mehr erforderlich, was dann eben Kosten spart.

Zeitsparend ist die Kalthärtung insofern, als dass die erforderlichen Werkzeuge und Formen einfacher und schneller zu handhaben sind und eben kein Nachtempern erforderlich ist. Zudem sollte auf eine größere Anzahl von Werkzeugen und Formen zurückzugreifen sein, die parallel zu bedienen sind, berücksichtigt man, dass diese deutlich kostengünstiger sind, was sich wiederum zeitsparend auswirkt.

Durch die eingesparte Zeit lassen sich dann wiederum Kosten sparen, wie bereits zuvor festgehalten.

Außerdem sind durch Kalthärtung hergestellte organischen Kunstgläser / -stoffe, Kunstglas- / Kunststoffwerkstücke und Kompositwerkstoffe und -werkstücke im Allgemeinen gänzlich frei von Lunkern und Rissen.

Denn im Falle der Kalthärtung liegt kein einen ungleichmäßigen (Lunker und Risse nach sich ziehenden) Schrumpf bedingender Temperaturgradient in der radikalisch polymerisierenden Mischung vor, wie dieses im Falle der Heißhärtung gegeben ist, wo von außen über die Wandung des jeweiligen Behältnisses Energie in Form von Wärme in die radikalisch zu polymerisierende Mischung eingetragen wird.

Und die durch Kalthärtung hergestellten organischen Kunstgläser / -stoffe, Kunstglas- / Kunststoffwerkstücke und Kompositwerkstoffe und -werkstücke sind üblicherweise gänzlich frei von Blasen und Poren.

Treten im Einzelfall dennoch Blasen und Poren auf, so ist die Anzahl und Größe dieser stark reduziert relativ zur Anzahl und Größe dieser in durch Heißhärtung hergestellten Werkstoffen und -stücken.

Dieses erklärt sich dadurch, dass weniger Blasen und Poren bedingendes Monomer wie zum Beispiel MMA freigesetzt wird.

Denn dank eines günstigeren Temperaturverlaufes und der gleichmäßigeren Verteilung der Reaktionswärme im radikalisch polymerisierenden Material im Falle der Kalthärtung polymerisiert das Monomer bereits im kalten Zustand gleichmäßig an, so dass es bei hohen Temperaturen bereits größtenteils als Oligomer vorliegt, als das es nicht mehr dem System entweichen kann.

Letztlich beobachtet man im Falle der Kalthärtung hieraus resultierend natürlich auch eine deutliche Reduzierung der Emissionen im Vergleich zur entsprechenden Heißhärtung.

Ebenso wie die schon zuvor erwähnte Schonung natürlicher Ressourcen in Form von Energie, kommt auch diese Reduzierung der Emissionen der Umwelt zugute; zudem mindert sie ein potentielles Gesundheitsrisiko für die jeweilig betroffenen Menschen deutlich.

### Aufgabe der vorliegenden Erfindung

Es ist ein kalthärtendes Verfahren zur Herstellung von organischen Kunstgläsern / -stoffen sowie organischen Kunstglas- /. Kunststoffwerkstücken ausgehend von füllstofffreien Acrylat-basierenden Mischungen zu entwickeln, als auch eines zur Darstellung von Komposit-werkstoffen und -werkstücken ausgehend von füllstoffhaltigen Acrylat-basierenden Stoffmischungen, ohne dass die entsprechenden Füllstoffe zwingend basischer Natur sein müssen.

Hierbei sollen sich die so hergestellten organischen Kunstgläser / -stoffe, Kunstglas- / Kunststoffwerkstücke und Kompositwerkstoffe und -werkstücke dadurch positiv vom Stand der Technik abheben, dass sie eine hohe Lichtechtheit und Transparenz, sowie keine Gelbfärbung aufweisen.

Ansonsten sollen sie zumindest dem Stand der Technik entsprechen, aufgrund gleichmäßigen Schrumpfes gänzlich frei von Lunkern und Rissen sein und aufgrund stark reduzierter Emission von Monomeren wie MMA eine geringere Anzahl und Größe von Blasen und Poren aufweisen.

Die hier beschriebene Aufgabe wird durch den Gegenstand der vorliegenden Erfindung gelöst.

### Lösung der Aufgabe - Erfindung

Mit auf Poly(meth)acrylat-urethan-(meth)acrylaten in Urethan(meth)acrylaten und gegebenenfalls (Meth)acrylaten und/oder Reaktivverdünnern basierenden Kunstharzen, die als vorvernetzte Systeme einen geringeren Schrumpf sowie eine geringere Emission an Monomer wie Methylmethacrylat bedingen, und geeigneten Zusatzstoffen lassen sich füllstofffreie Mischungen formulieren, die sich unter Erhalt von organischen Kunstgläsern / -stoffen sowie von organischen Kunstglas- / Kunststoff-werkstücken überraschenderweise kalthärten lassen, ebenso wie füllstoffhaltige Stoffmischungen, unter Erhalt von Kompositwerkstoffen und -stücken, ohne dass die in den Stoffmischungen enthaltenen

Füllstoffe zwingend basischer Natur sein müssen, wobei sich die so erhaltenen Kunstgläser / -stoffe, Kunstglas- / Kunststoffwerkstücke, Kompositwerkstoffe und -stücke dadurch auszeichnen, dass sie eine hohe Lichtechtheit und Transparenz, sowie keine Gelbfärbung aufweisen.

Außerdem sind sie frei von Lunkern und Rissen, sowie üblicherweise frei von Blasen und Poren, zumindest aber ist deren Anzahl und Größe im Vergleich zum entsprechenden Stand der Technik stark reduziert sind.

Das Verfahren zeichnet sich dadurch aus, dass es energie- und zeitsparend, und somit letztlich auch kostensparend ist.

Um unter den Bedingungen der Kalthärtung zufriedenstellende Ergebnisse, d.h. eine vollständige und schnelle Aushärtung von Mischungen mit auf Poly(meth)acrylat-urethan-(meth)acrylaten in Urethan(meth)acrylaten und gegebenenfalls (Math)acrylaten und/oder Reaktivverdünnern basierenden Kunstharzen zu erzielen, reicht es nicht, in Anlehnung an den Stand der Technik zu verfahren, zum Beispiel in Anlehnung an das Patent WO 02/068519 A2, in dem unter Einsatz einer Härter-Kombination aus einem geeigneten Radikalkettenstarter (tert.-Butylperoxymaleinsäure), einem Beschleuniger (GDMA), einem geeigneten Metallhydroxid (in Form einer Calciumhydroxid-Dispersion) und Wasser die Katalyse der radikalische Polymerisation beschrieben wird.

Denn hier sollen ja zufriedenstellende Ergebnisse auch dann erzielt werden, wenn keine basischen Füllstoffe enthalten sind.

Überraschenderweise beobachtet man nur dann eine schnelle und vollständige Aushärtung der Mischungen mit auf Poly(meth)acrylat-urethan-(meth)acrylaten in Urethan(meth)acrylaten und gegebenenfalls (Meth)acrylaten und/oder Reaktivverdünnern basierenden Kunstharzen, wenn die mit einer wie oben beschriebenen Härter-Kombination katalysierte, radikalische Polymerisation in Gegenwart von Poly(meth)acrylaten wie PMMA erfolgt.

Ein vergleichbarer Effekt durch Zugabe von Monomeren wie MMA ist nicht erreichbar, und das obwohl eine derartige Beschleunigung eigentlich ausschließlich bei Zugabe von monomeren (Meth)acrylaten zu erwarten ist, nicht aber bei Zugabe von polymeren.

Die Beschleunigung der Kalthärtung, ebenso wie die Werte für das E-Modul, die Dehnung und die Biegefestigkeit stehen hierbei im direkten Verhältnis zur Menge an Poly(meth)acrylat.

Durch Zugabe einer geeigneten Menge von geeigneten Poly(meth) acrylaten zur jeweiligen Mischung, idealerweise in einem Monomer wie Methylmethacrylat gelöst, lassen sich alle füllstofffreien und -haltigen Mischungen, die auf Poly(meth)acrylat-urethan-(meth)acrylaten in Urethan(meth)acrylaten und gegebenenfalls (Meth)acrylaten und/oder Reaktivverdünnern basierende Kunstharze enthalten, unter Einsatz der oben beschriebenen Härter-Kombination kalthärten.

Für alle in diesem Patent beschriebenen Kompositwerkstoffe und -werkstücke gilt, dass sie zusätzlich zu den bereits beschriebenen Vorzügen die gleichen technischen Vorzüge gegenüber dem Stand der Technik aufweisen, wie auch schon die heißgehärteten, die in der DE-Patentanmeldung 10 2005 004 639.8 beschrieben sind.

So beobachtet man eine höhere Chemikalien- und TemperaturbeständigKeit, sowie eine bessere Optik (Glanz, Farbtiefe, Klarheit). Das alles unter Beibehalt der positiven Eigenschaften von Systeme, die dem Stand der Technik entsprechen, wie hohe Härte, Schlagzähigkeit, Kratzfestigkeit, UV-Beständigkeit, Hydro- und Oleophobie.

vergleichbare gilt für die entsprechend kaltgehärteten organischen Kunstgläser / -stoffe und organischen Kunstglas- / Kunststoffwerkstücke.

Zusätzlich zu den oben aufgeführten Vorzüge, entsprechen ihre Eigenschaften mindestens dem Stand der Technik. So weisen sie zum Beispiel ein ähnliches thermoplastisches Verhalten wie Plexiglas auf, die Chemikalienbeständigkeit hingegen ist höher. Im Gegensatz zum Plexiglas sind sie auch beständig gegenüber alkoholen, Estern, Ketonen und aromatischen Kohlenwasserstoffen.

Die Erfindung betrifft somit:

### 1. Radikalisch kalthärtbare Stoffgemische,

bestehend aus mindestens einem auf Poly(meth)acrylat-urethan-(meth)acrylaten in Urethan-(meth)acrylaten und gegebenenfalls (Meth)acrylaten und/oder Reaktivverdünnern basieren den Kunstharz, gegebenenfalls weiteren (Meth)acrylaten und/oder Reaktivverdünnern, sowie Poly(meth)acrylaten und gegebenenfalls diversen Inhaltsstoffen, wie sie dem Fachmann bekannt sind, ausgewählt aus Pigmenten (Pigmentpasten), Füllstoffen wie z.B. (zumeist mit Epoxidharz, Polyurethanharz oder Haftvermittlern wie Silanen oder Siloxanen beschichteten) Naturmineralien, Hilfstoffen (z.B. hochdisperse Kieselsäure als Anti-Absetzmittel, Wachse als Trennmittel oder Weichmacher zwecks Einstellung des E-Moduls etc.), Inhibitoren (z.B. 4-Methoxyphenol oder 2,6-Di-tert.-butyl-4-methylphenol), Härter-Komponenten (z.B. Radikalkettenstarter, Amin- und Mercapto-Beschleuniger, wässerige, alkalische Lösungen) und multi-funktionellen Vernetzern, als auch deren Herstellung durch Mischen der zuvor aufgeführten Bestandteile.

Die oben erwähnten weiteren (Meth)acrylate und/oder Reaktivverdünner werden hierbei bezogen auf das Stoffgemisch ohne Inhaltsstoffe gewohnlich mit einem Anteil von 5 bis 30 %, bevorzugt mit einem von 10 bis 60 % und besonders bevorzugt mit einem von 20 bis 40 % eingesetzt, die Poly(meth)acrylate gewöhnlich mit' einem von 1 bis 50 %, bevorzugt mit einem von 2 bis 40 % und besonders bevorzugt mit einem von 4 bis 15 %.

Die Inhaltsstoffe werden bezogen auf das gesamte radikalisch kalthärtbare Stoffgemische mit einem Anteil von üblicherweise 0 bis 95 %, bevorzugt 5 bis 90 % und besonders bevorzugt von 50 bis 90 % eingesetzt (siehe hierzu auch die DE-Patentanmeldung 10 2005 004 639.8).

Gemäß der DE 10 2005 004 639.8 umfassen die im vorliegenden Anspruch 1 dargelegten Schritte a) bis d) insbesondere die folgenden spezifischen Merkmale.
(a) Bereitstellen von (Meth)acrylatmonomeren (I), die keine mit Isocyanatgruppen reaktiven Reste aufweisen, und von (Meth)acrylatmonomeren (II), die (einen) mit Isocyanatgruppen reaktive(n) Rest(e) aufweisen;
(b) Polymerisieren der (Meth)acrylatmonomere (I) und (II) zu einem Poly(meth)acrylat (III), das mit Isocyanatgruppen reaktive Reste aufweist;
(c) Umsetzen des Poly(meth)acrylats (III) mit einer Isocyanatverbindung (IV), die mehr als eine Isocyanatgruppe aufweist, in einer Weise, dass nur 5 bis 40 %, vorzugsweise 10 bis 30 %, der Isocyanatgruppen der Isocyanatverbindung (IV) mit vorgenannten mit Isocyanatgruppen reaktiven Resten reagieren; wobei Teilvernetzung von (III) unter Erhöhung des Gewichtsmittel des Molekulargewichts um den Faktor 2 bis 20 auftritt, indem ein gegebenes (IV) jeweils mit mehr als einer seiner Isocyanatgruppen mit mehr als einem gegebenen (III) reagiert; und
(d) Umsetzen der in (c) erhaltenen Zusammensetzung mit (Meth)acrylatmonomeren (II).

Der Begriff "Urethan" bezeichnet in der vorliegenden Erfindung das Additionsprodukt des (der) mit Isocyanatgruppen reaktiven Reste(s) des Poly(meth)acrylats (III) und/oder des (Meth)acrylats (II) mit den Isocyanatgruppen der Isocyanatverbindung (IV). Je nach Art des (der) mit Isocyanatgruppen reaktiven Reste(s) können dabei beispielsweise Einheiten gebildet werden, welche Carbamidsäureester(-O-(CO)-NH-), Carbonyloxycarbamoyl (-(CO)-O-(CO)-NH-), Carbamid- (-NH-(CO)-NH-) und/oder Thiocarbamidsäure-S-estergruppen (-S-(CO)-NH-) enthalten.

In dem in Schritt (c) erhaltenen polymeren Additionsprodukt (V) des Poly(meth)acrylats (III), welches mit Isocyanatgruppen reaktive Reste aufweist, mit der Isocyanatverbindung (IV), welche mehr als eine Isocyanatgruppe aufweist, sind (III) und (IV) über durch die Additionsreaktion gebildete Urethaneinheiten verknüpft. Das Additionsprodukt (V) weist somit ein polymeres Rückgrat auf (welches sich von (III) ableitet), das über Urethaneinheiten mit mindestens eine freie Isocyanatgruppe aufweisenden Resten (welche sich von (IV) ableiten) verknüpft ist. Das Additionsprodukt (V) kann nun über seine freien Isocyanatgruppen einerseits in Schritt (c) unter Bildung eines teilvernetzten Produkts mit weiterem Poly(meth)acrylat (III) verknüpft werden und andererseits in Schritt (d) mit weiterem (Meth)acrylat (II) reagieren.

Gleichzeitig reagiert in Schritt (c) zugesetzte, überschüssige bzw. nicht abreagierte Isocyanatverbindung (IV) in Schritt (d) mit (Meth)acrylat (II) zu Urethan(meth)acrylat. Dieses übernimmt in dem erfindungsgemäßen Kunstharz gleichsam die Funktion eines Reaktivverdünners.

Die Isocyanatverbindung (IV) wird in Schritt (c) zweckmäßigerweise im Überschuss eingesetzt. Damit ist gemeint, dass ein Überschuss an Molekülen der Isocyanatverbindung (IV), bezogen auf die Anzahl der insgesamt vorhandenen, mit Isocyanatgruppen reaktiven Reste der Verbindung (III), vorliegt. Vorzugsweise wird die Isocyanatverbindung (IV) in Schritt (c) in einer Menge von 2,5 bis 20 Moläquivalent pro Mol der mit Isocyanatgruppen reaktiven Reste eingesetzt.

Der Prozentsatz der Isocyanatgruppen der Isocyanatverbindung (IV) in Schritt (c), der mit den mit Isocyanatgruppen reaktiven Resten reagiert, kann beispielsweise auf stöchiometrischem Wege festgelegt werden, d. h. durch die Wahl eines entsprechenden Überschusses der Isocyanatverbindung (IV), bezogen auf die vor der Umsetzung von (III) mit (IV) vorhandene Anzahl der mit Isocyanatgruppen reaktiven Reste, wobei diese z.B. aus der eingesetzten Menge der Monomere (I) und (II) in Schritt (a) berechnet werden kann.

Alternativ kann der Prozentsatz der Isocyanatgruppen der Isocyanatverbindung (IV), die mit den mit Isocyanatgruppen reaktiven Resten reagieren, durch Bestimmung der nach der Umsetzung von Schritt (c) noch vorhandenen freien Isocyanatgruppen festgestellt werden (z.B. durch die Titrationsmethode nach DIN 53185).

In einer bevorzugten Ausführungsform erfolgt die Umsetzung in Schritt (b) und/oder die Umsetzung in Schritt (c) in Gegenwart eines Lösungsmittels. Besonders bevorzugt wird die Umsetzung in Schritt (b) und die Umsetzung in Schritt (c) im gleichen Lösungsmittel durchgeführt. Das verwendete Lösungsmittel kann erfindungsgemäß nach und/oder während der Umsetzung gemäß Schritt (c) abgezogen werden. Die in Schritt (c) zugegebene Isocyanatverbindung (IV) kann indessen einstweilen dessen Funktion übernehmen. Zur Einstellung der Viskosität kann in einer besonderen Ausführungsform ein Reaktivverdünner vor und/oder nach Schritt (d) zugesetzt werden.

Vorzugsweise werden in Schritt (a) die (Meth)acrylatmonomere (I) zu den (Meth)acrylatmonomeren (II) in einem Molverhältnis von 100:1 bis 1:1, stärker bevorzugt 20:1 bis 4:1, eingesetzt. In einer besonderen Ausführungsform kann in Schritt (c) die Isocyanatverbindung (IV) in einer Menge von 2,5 bis 20 Moläquivalent, stärker bevorzugt 4 bis 12 Moläquivalent, pro Mol der mit Isocyanatgruppen reaktiven Reste eingesetzt werden. Es ist bevorzugt in Schritt (d) die (Meth)acrylatmonomere (II) in einer Menge von 1,0 bis 1,1 Moläquivalent pro Mol der verbleibenden Isocyanatgruppen einzusetzen. Vorzugsweise sollten so keine freien Isocyanatgruppen im Endprodukt, dem erfindungsgemäßen Kunstharz, verbleiben.

Der Begriff (Meth)acrylate, wie er im Rahmen der vorliegenden Erfindung verwendet wird, umfasst sowohl Methacrylate als auch Acrylate.

Als eine der. Komponenten werden erfindungsgemäß in Schritt (a) (Meth)acrylate (I), die keine mit Isocyanat reaktiven Reste aufweisen, eingesetzt. Als (Meth)acrylate (I), die keine mit Isocyanat reaktiven Reste aufweisen, finden erfindungsgemäß bevorzugt Ester der (Meth)acrylsäure Verwendung, wobei der Alkoholteil des Esters vorzugsweise 1 bis 18, stärker bevorzugt 1 bis 8, am stärksten bevorzugt 1 bis 4, Kohlenstoffatome aufweist und sowohl geradkettig als auch verzweigt sein kann. Gegebenenfalls kann der Alkoholteil des Esters 1 bis 8 Heteroatome, wie Sauerstoff, Stickstoff oder Schwefel, aufweisen.

Bis zu maximal 70 % der in Poly(meth)acrylat (III) interpolymerisierten (Meth)acrylatmonomere (I) können gegen andere Monomere mit reaktiven ethylenischen Gruppen ausgetauscht sein. In Frage kommen dafür Verbindungen ausgewählt aus Vinyltoluol , Vinylacetat, Styrol und keine mit Isocyanat reaktiven Gruppen aufweisende (Meth)acrylamide wie N-Butoxymethyl(meth)acrylamid und 3-Dimethylaminopropyl(meth)-acrylamid.

Als weitere erfindungswesentliche Komponenten werden in Schritt (a) (Meth)acrylatmonomere (II), die (einen) mit Isocyanatgruppen reaktive(n) Rest(e) aufweisen, eingesetzt. Um die spätere Umsetzung mit einer Isocyanatverbindung zu gewährleisten weisen die erfindungsgemäßen (Meth)acrylate mit Isocyanatgruppen reaktive Reste auf. Grundsätzlich kommen hier (Meth)acrylatmonomere in Frage, die mindestens eine nucleophile Gruppe aufweisen, die durch Reaktion mit Isocyanatgruppen eine chemische Bindung eingehen kann, wie z.B. eine Gruppe ausgewählt aus einer Hydroxy-, Carboxy-, Amino- und Mercaptogruppe, vorzugsweise eine Gruppe ausgewählt aus einer Hydroxy-, Amino- und Mercaptogruppe, stärker bevorzugt eine Gruppe ausgewählt aus einer Hydroxy- und Aminogruppe und am stärksten bevorzugt eine Hydroxygruppe. Auch der Einsatz von Gemischen von (Meth)acrylätmonomeren (II), die unterschiedliche der vorgenannten Gruppen tragen, ist möglich. Je nach Art bzw. nucleophiler Gruppe des (der) mit Isocyanatgruppen reaktiven Reste(s) können so Einheiten gebildet werden, welche beispielsweise Carbamidsäureestergruppen, Carbonyloxycarbamoylgruppen, Carbamidgruppen und/oder Thiocarbamidsäure-S-estergruppen enthalten. Sie werden in der vorliegenden Erfindung zusammenfassend als "Urethan" bezeichnet, da sich die gebildeten Einheiten von dessen Struktur ableiten. Bevorzugt sind Einheiten, welche Carbamidsäureestergruppen, Carbamidgruppen und/oder Thiocarbamidsäure-S-estergruppen enthalten, stärker bevorzugt solche, welche Carbamidsäureestergruppen und/oder Carbamidgruppen enthalten, am stärksten solche, welche Carbamidsäureestergruppen enthalten. Üblicherweise ist eine oder mehrere, vorzugsweise eine, zwei, drei oder vier, besonders bevorzugt eine, der erfindungsgemäß verwendeten nucleophilen Gruppen an einen C₂₋₁₀-Kohlenwasserstoffrest, vorzugsweise einen C₂₋₄-Kohlenwasserstoffrest, gebunden, der wiederum mittels einer Ester- oder Amidbindung (wie z.B. beim Methylol(meth)acrylamid), vorzugsweise mittels einer Esterbindung, an die Säuregruppe des (Meth)acrylats gebunden ist. Vorzugsweise ist die nucleophile Gruppe eine oder mehrere, besonders bevorzugt eine, zwei, drei oder vier, am stärksten bevorzugt eine, Hydroxygruppe(n).

In einer Ausführungsform der Erfindung kann die Umsetzung in Schritt (b) und/oder in Schritt (c) in Gegenwart eines Lösungsmittels durchgeführt werden. Vorzugsweise wird in diesem Falle bei beiden Umsetzungen das gleiche Lösungsmittel verwendet. Geeignete Lösungsmittel zeichnen sich dadurch aus, dass sie keine nucleophilen Gruppen wie z.B. Hydroxy- oder Carbonsäuregruppen, aufweisen, sowie dadurch, dass sie einen geeigneten Siedepunkt aufweisen, vorzugsweise einen Siedepunkt von 40 bis 150 °C, stärker bevorzugt einen Siedepunkt von 80 bis 130 °C, damit sie leicht nach Abschluss und/oder während der Umsetzung entfernt werden können. Bevorzugte Lösungsmittel, die erfindungsgemäß verwendet werden können, sind Ester wie z.B. Butylacetat, Ketone wie z.B. Methylethylketon und Methylisobutylketon, Ether wie z.B. Tetrahydrofuran und Dibutylether sowie aromatische Kohlenwasserstoffe wie z.B. Toluol. Geeignete Lösungsmittel sind auf dem Fachgebiet bekannt und können in Abhängigkeit der eingesetzten Reaktionspartner vom Fachmann leicht ausgewählt werden.

Vorzugsweise wird die Umsetzung gemäß Schritt (b) mittels einer radikalischen Lösungs-Polymerisation der Komponenten (I) und (II) durchgeführt. Wird ein Lösungsmittel bei dieser Umsetzung eingesetzt, kann das Lösungsmittel nach erfolgter Umsetzung des Schrittes (b) entfernt oder durch ein anderes Lösungsmittel ersetzt werden. In einer bevorzugten Ausführungsform wird das Reaktionsgemisch aus Schritt (b) ohne Austausch oder Entfernung des verwendeten Lösungsmittels direkt in Schritt (c) eingesetzt.

In einer besonderen Ausführungsform kann die radikalische Lösungspolymerisation durch die Verwendung eines Katalysators unterstützt werden. Bevorzugte Katalysatoren sind Radikalkettenstarter. Als Beispiele für geeignete, auf dem Fachgebiet bekannte Radikalkettenstarter seien Diacylperoxide, wie Benzoylperoxid oder Dilaurylperoxid, Alkylhydroperoxide, wie t-Butylhydroperoxid oder Cumolhydroperoxid, Alkylperester, wie t-Butylperbenzoat und t-Butylperoxy-2-ethylhexanoat, als auch Azoverbindungen wie Azodiisobutyronitril genannt. Der Katalysator, z.B. der Radikalkettenstarter, wird vorzugsweise in einer Menge von 1 bis 20 Gew.-%, vorzugsweise 2 bis 15 Gew.-%, bezogen auf die Gesamtmenge der Komponenten (I) und (II) eingesetzt.

Als Polymerisationsregler können z.B. Mercaptane wie 1-Dodecanthiol oder Alkohole wie 2-Propanol eingesetzt werden, vorzugsweise jeweils in einer Menge von 0 bis 3 Gew.-%, bezogen auf die Gesamtmenge der Komponenten (I) und (II). Zur Regelung der Molekülgröße ist auch eine Reaktion unter erhöhtem Druck, vorzugsweise einem Druck von mehr als Atmosphärendruck (der üblicherweise mit 1,01325 bar angegeben wird) bis 8 bar, besonders bevorzugt von 1,5 bis 8 bar und am stärksten bevorzugt von 1,5 bis 5 bar, möglich. Ein solcher erlaubt, in Abhängigkeit des verwendeten Lösungsmittels, bei Bedarf auch die Arbeit bei erhöhten Temperaturen bis etwa 250°C (siehe unten).

Durch die Polymerisation in Schritt (b) werden Poly(meth)acrylate (III) erhalten, die mit Isocyanatgruppen reaktive Reste aufweisen.

Die Bildung der erfindungsgemäßen Poly(meth)acrylate (III) erfolgt üblicherweise unter Einsatz geeigneter Katalysatoren, z.B. Radikalkettenstarter, durch Umsetzung der vorstehenden (Meth)acrylate (II), die (einen) mit Isocyanatgruppen reaktive(n) Rest(e) aufweisen, mit den vorstehenden (Meth)acrylaten (I), die keine mit Isocyanat reaktive Reste aufweisen. Vorzugsweise geschieht dies in einem geeigneten Lösungsmittel. Bevorzugte Lösungsmittelmengen sind dabei 10 bis 150 Ges.-%, insbesondere 50 bis 100 Ges.-%, bezogen auf Komponenten (I) und (II). Die Umsetzung erfolgt zweckmäßigerweise bei Temperaturen im Bereich der Siedetemperatur des Lösungsmittels, also unter Rückfluss. Bevorzugte Temperaturen liegen dabei bei 40 bis 150 °C, insbesondere bei 80 bis 130°C. Unter Druck kann mit Vorteil auch bei Temperaturen von 40 bis 250 °C, insbesondere von 100 bis 180 °C, gearbeitet werden.

Die erfindungsgemäßen Poly(meth)acrylate (III) weisen vorzugsweise 1 bis 100, besonders bevorzugt 1 bis 10, mit Isocyanatgruppen reaktive Reste auf, und setzen sich aus bevorzugt zehn bis tausend (Meth)acrylat-Monomerbausteinen des Typs I und II, vorzugsweise in einem Verhältnis von 100:1 bis 1:1, stärker bevorzugt in einem Verhältnis von 20:1 bis 9:1, zusammen. Bevorzugte Poly(meth)acrylate (III) weisen ein Gewichtsmittel des Molekulargewichts (M_{w}) von etwa 2.000 bis 10.000 g/mol, vorzugsweise etwa 4.000 bis 8.000 g/mol, am stärksten bevorzugt etwa 6.000 g/mol auf (bei einer Molekulargewichtsverteilung von etwa 400 bis etwa 30.000 g/mol).

Das Poly(meth)acrylat (III) aus Schritt (b) wird in Schritt (c) mit einer Isocyanatverbindung (IV), die mehr als eine Isocyanatgruppe aufweist (Polyisocyanat), in einer Additionsreaktion umgesetzt.

Selbstverständlich können auch mehrere, verschiedene Poly(meth)acrylate (III) in Schritt (c) eingesetzt werden.

Als erfindungsgemäße Polyisocyanate finden einerseits aliphatische, aromatische und heterocyclische Isocyanate mit zwei oder mehr Isocyanatgruppen in einem Molekül (Monomere) Verwendung.

Beispiele für Polyisocyanate (IV) sind: Toluol-2,4-diisocyanat (2,4-TDI), Toluol-2,6-diisocyanat (2,6-TDI), 3-Phenyl-2-ethylendiisocyanat, 1,5-Naphthalindiisocyanat, Cumol-2,4-diisocyanat, 4-Methoxy-1,3-diphenyldiisocyanat, 4-Chlor-1,3-phenyldiisocyanat, Diphenylmethan-4,4'-diisocyanat, Diphenylmethan-2,4'-diisocyanat, Diphenylmethan-2,2'-diisocyanat, 4-Brom-1,3-phenyldiisocyanat, 4-Ethoxy-1,3-phenyldiisocyanat, 2,4'-Diisocyanat-diphenylether, 5,6-Dimethyl-1,3-phenyldiisocyanat, 2,4-Dimethyl-1,3-phenyldiisocyanat, 4,4-Diisocyanatodiphenylether, 4,6-Dimethyl-1,3-phenyldiisocyanat, 9,10-Anthracendiisocyanat, 2,4,6-Toluoltriisocyanat, 2,4,4'-Triisocyanatodiphenylether, 1,4-Tetramethylendiisocyanat, 1,6-Hexamethylendiisocyanat (HDI), 1,10-Decamethylendiisocyanat, 1,3-Cyclohexylendiisocyanat, 4,4'-Methylen-bis(cyclohexylisocyanat), Xyloldiisocyanat, 1-Isocyanato-3-methylisocyanato-3,5,5-trimethylcyclohexan (Isophorondiisocyanat, IPDI), 1,3-Bis(isocyanato-1-methylethyl)benzol (m-TMXDI) und 1,9-Bis(isocyanato-1-methylethyl)benzol (p-TMXDI).

Des weiteren können auch Oligomere (sogenannte "Präpolymere") von wie oben definierten monomeren Isocyanatverbindungen, vorzugsweise solche der vorstehend aufgeführten Beispiele von monomeren Isocyanatverbindungen, zum Einsatz kommen. Die zum Einsatz in der vorliegenden Erfindung geeigneten Oligomere weisen zwei oder mehr Isocyanatgruppen auf. Vorzugsweise weisen sie ein Molekulargewicht von 100 bis 1.500 g/mol auf. Beispiele für solche Oligomere sind Trimere von wie oben definierten Isocyanaten (sogenannte "Isocyanurate"), wie das Trimere des Hexamethylentriisocyanats (HDI), welches ein Molekulargewicht von 504,6 g/mol aufweist, und das Trimere von Isophorondiisocyanat (IPDI), welches ein Molekulargewicht von 666,9 g/mol aufweist. Beide sind trifunktionell bezüglich der Isocyanatgruppe.

Und schließlich können noch Umsetzungsprodukte von wie oben definierten monomeren Isocyanatverbindungen, vorzugsweise solche der vorstehend aufgeführten Beispiele von monomeren Isocyanatverbindungen, verwendet werden. Die zur Verwendung in der vorliegenden Erfindung geeigneten Umsetzungsprodukte weisen zwei oder mehr Isocyanatgruppen auf. Beispiele für solche Umsetzungsprodukte sind Verbindungen, die durch Reaktion der wie oben definierten monomeren Isocyanatverbindungen mit Polyolen, wie z.B. Ethylglykol, Propylglykol, Neopentylglykol, Hexandiol, Trimethylolpropan, Glycerin und Hexantriol, oder mit Wasser erhalten werden. Beispiele hierfür sind Polyisocyanat-Polyol-Addukte wie das Addukt eines Moleküls Trimethylolpropan mit drei Molekülen Toluoldiisocyanat (TDI), welches bezüglich der Isocyanatgruppe trifunktionell ist, und Biurethverbindungen wie das Reaktionsprodukt dreier Moleküle Hexamethylentriisocyanat (HDI) mit einem Molekül Wasser unter CO₂-Abspaltung, welches bezüglich der Isocyanatgruppe bifunktionell ist.

Durch den erfindungsgemäß bevorzugten Einsatz aliphatischer Oiisocyanate wie HDI oder IDPI entstehen besonders lichtstabile und verfärbungsresistente Kunstharze.

Bevorzugte Reaktionsprodukte der Umsetzung von Poly(meth)acrylat (III) mit Isocyanat (IV) weisen üblicherweise eine Molekulargewichtsverteilung von etwa 1.000 bis etwa 200.000 g/mol auf. Das hohe Molekulargewicht spricht, im Vergleich mit dem Molekulargewicht vor einer Reaktion mit der Isocyanatverbindung (IV), für eine Teilvernetzung der erfindungsgemäßen Poly(meth)acrylat-urethan-(meth)acrylate. Eine solche kann beispielsweise erfolgen, wenn ein Teil der Moleküle der Isocyanatverbindung (IV), die mehr als eine Isocyanatgruppe aufweist, mit den mit Isocyanatgruppen reaktiven Resten mehr als einer Poly(meth)acrylatkette (III) reagiert. Auf diese Weise kommt es zu einer Erhöhung des Gewichtsmittels um den Faktor 2 bis 20, also zu einer Vernetzung von durchschnittlich etwa 2 bis 20 Molekülen des Poly(meth)acrylats (III).

Während und/oder nach Abschluss von Schritt (c) kann in einer bevorzugten Ausführungsform das verwendete Lösungsmittel entfernt werden.

Das Reaktionsgemisch aus Schritt (c) wird in Schritt (d) mit (Meth)acrylatmonomeren (II) umgesetzt, wobei sich die mit Isocyanatgruppen reaktiven Reste der (Meth)acrylatmonomeren (II) im Rahmen einer Additionreaktion an die verbliebenen Isocyanatgruppen addieren.

Die Additionsreaktionen in Schritt (c) und/oder (d) können erfindungsgemäß durch die Verwendung geeigneter Katalysatoren unterstützt werden. Als Katalysatoren finden gegebenenfalls die gewöhnlichen Urethanisierungskatalysatoren wie z.B. Triethylamin, DABCO oder Dibutylzinndilaurat Verwendung.

Die Einstellung auf eine geeignete Viskosität kann vor oder nach Schritt (d) durch Zugabe von (Meth)acrylaten und/oder geeigneten Reaktivverdünnern erfolgen.

Als Reaktivverdünner können auf dem Fachgebiet bekannte niedermolekulare Verbindungen eingesetzt werden, die vorzugsweise 1 bis 5 reaktive Doppelbindungen aufweisen. Beispiele dafür sind im nachstehenden Punkt 1.2 genannt. Bevorzugte Mengen an Reaktivverdünner liegen im Bereich von 0 bis 50 Gew.-%, insbesondere von 0 bis 30 Ges.-%, bezogen auf die Gesamtzusammensetzung.

Eine typische Zusammensetzung kann beispielsweise 52 Gew.-% Polymer, 25 Gew.-% an Urethan(meth)acrylat und 23 Gew.-% an Methyl(meth)acrylat und/oder Reaktivverdünner enthalten.

Hierbei ist festzuhalten, dass in Abhängigkeit von der jeweiligen molekularen Masse und chemischen Struktur der in den erfindungsgemäßen Kunstharzen enthaltenen Bestandteile, dem Anteil an Urethangruppierungen in diesen, dem Verhältnis dieser Bestandteile und letztlich natürlich auch in Abhängigkeit von der Temperatur das Material flüssig bzw. wachsartig pastös vorliegt. Dass das Material auch bei Raumtemperatur in Abhängigkeit von den oben aufgeführten Gegebenheiten wachsartig pastös vorliegen kann, ist nicht unwesentlich auf die enthaltenen Urethangruppierungen zurückzuführen, so zeichnen sich diese durch ihre hohe Polarität und Befähigung zur Wasserstoffbrückenbindung aus.

Prinzipiell können in Schritt (c) auch Mischungen aus einem bzw. mehreren Poly(meth)acrylaten (III) mit anderen Polyolen wie z.B. Trimethylolpropan; Di(trimethylolpropan), Pentaerythritol, Di(pentaerythritol), Neopentylglycol und Methylpropandiol sowie Polyesterpolyoien, Polycarbonatdiolen oder Polyetherpolyolen wie z.B. Neopentylglycolpropoxylat, Trimethylolpropanethoxylat, Trimethylolpropanpropoxylat, Pentaerythritolethoxylat und Pentaerythritolpropoxylat verwendet werden. Bei Einsatz derartiger Polyole kann gegebenenfalls auf den Einsatz von (Meth)acrylat und Reaktivverdünnern zur Viskositätseinstellung verzichtet werden. Der Einsatz derartiger Polyole kann sich jedoch nachteilig auf mechanische sowie chemische Eigenschaften auswirken, weshalb derartige Formulierungen - im Sinne der Erfindung - nicht als die bevorzugten anzusehen sind.

### 2. Härter-Komponenten,

ausgewählt aus geeigneten Radikalkettenstartern, geeigneten Beschleuniger, ggfs. geeigneten Metallhydroxiden und gegebenenfalls (idealerweise deionisiertem) Wasser. Jeweils eine dieser Komponenten kann grundsätzlich auch bereits als Hilfsstoff in den radikalisch härtbaren Stoffgemischen nach 1. enthaltene sein, nicht aber in Kombination mit einer anderen Komponente.

Die einzige Ausnahme stellt Wasser dar, das auch in Kombination mit einer der drei anderen aufgeführten Komponenten in den Stoffgemischen nach 1. bereits enthalten sein kann.

Bezogen auf das radikalisch härtbare Stoffgemisch ohne Inhaltsstofe werden folgende Mengen an 100 %igen Härter-Komponenten eingesetzt:
Üblicherweise 0,1 bis 5 % Radikalkettenstarter, 0 bis 0,2 % Beschleuniger, 0 bis 3 % Calciumhydroxid und 0 bis 2 % Wasser, bevorzugt 0,5 bis 3 % Radikalkettenstarter, 0,01 bis 0,05 % Beschleuniger, 0 bis 1 % Calciumhydroxid und 0 bis 1 % Wasser, besonders bevorzugt 1 bis 2 % Radikalkettenstarter, 0,02 bis 0,03 % Beschleuniger, 0 bis 0,5 % Calciumhydroxid und 0 bis 0,6 % % Wasser.

### 3. Kompositwerkstoffe, organische Kunstgläser und -stoffe,

die durch Mischen radikalisch kalthärtbarer Stoffgemische gemäß 1. mit Härter-Komponenten gemäß 2. und durch die sich anschließende radikalische Polymerisation der in diesen Mischungen enthaltenen, auf Poly(meth)acrylat-urethan-(meth)acrylaten in Urethan(meth)acrylaten und gegebenenfalls (Meth)acrylaten und/oder Reaktivverdünnern basierenden Kunstharzen und gegebenenfalls enthaltenen weiteren (Meth)acrylatan und/oder Reaktivverdünnern darstellbar sind.

### 4. Kompositwerkstücke,

wie z.B. Topfgriffe, Schalter für elektrische Einrichtungen, Sitzschalen, Windradflügel, Dekorflächen, Gartenplatten, Bänke, Arbeitsflächen, Fussbodenplattan, Platten für kosmetische Artikel in Badezimmers, Schalen und Spülbecken, bestehend aus den unter 3. beschriebenen Kompositwerkstoffen, die nach Zugabe von Härterkomponenten gemäß 2. zu Stoffgemischen gemäß 1. unter radikalische Polymerisation der in diesen enthaltener, auf Poly(meth)acrylat-urethan-(meth)acrylaten in Urethan(meth)acrylaten und gegebenenfalls (Meth)acrylaten und/oder Reaktivverdünnern basierenden Kunstharzen und gegebenenfalls weiteren in diesen enthaltenen (Meth)acrylaten und/oder Reaktivverdünnern, unter Formgebung darstellbar- sind.

### 5. Organische Kunstglas- und Kunststoffwerkstücke,

die z.B. Verglasungen von Flugzeugen, Omnibussen und Dächern, leichtgewichtige Lumen, Prismen, Linsen und lichtleitende Fasern, Uhrgläser, Schutzverkleidung für Maschinen, Rohre in der Getränkeindustrie, Sanitärbauteile wie Badewannen, Duschtassen und Waschbecken, Behälter, Raumleuchten, Instrumente, gewellte Platten im Bauwesen, transparente Lärmschutzwände, Büroartikel, Zeichengeräte (Geodreiecke, Ablagen und ähnliches), Möbel und Bilderrahmen, bestehend aus den unter 3. beschriebenen organischen Kunstgläsern und -stoffen, die nach Zugabe von Härter-Komponenten gemäß 2. zu Stoffgemischen gemäß 1. unter radikalischer Polymerisation der in diesen enthaltenen auf Poly(meth)acrylat-urethan-(meth)acrylaten in Urethan(meth)acrylaten und gegebenenfalls (Meth)acrylaten und/oder Reaktivverdünnern basierenden Kunstharzen und gegebenenfalls weiteren in diesen enthaltenen (Meth)acrylaten und/oder Reaktivverdünnern, unter Formgebung darstellbar sind.

Ein Verfahren zur Herstellung von organischen Kunstglas-, Kunststoff- und Kompositwerkstücken aus Kunstglas, Kunststoff oder Kompositwerkstoff,
die aus der radikalischen Kalthärtung von Stoffgemischen gemäß 1. unter Einsatz von Härterkomponenten gemäß 2. erhältlich sind, umfasst die Schritte der
(I) Bereitstellung einer Zusammensetzung, die mindestens ein auf Poly(meth)acryLat-urethan-(meth)acrylater, in Urethan(meth)acrylaten und gegebenenfalls (Meth)acrylaten und/oder Reaktivverdünnern basierendendes Kunstharz, gegebenenfalls zusätzliche (Meth)acrylate und/oder Reaktivverdünner, sowie Poly(meth)acrvlate und gegebenenfalls einen oder mehrere Inhaltsstoffen, wie sie dem Fachmann bekannt sind, ausgewählt aus Pigmenten (Pigmentpasten), Füllstoffen wie z.B. (zumeist mit Epoxidharz, Polyurethanharz oder Haftvermittlern wie Silanen oder Siloxanen beschichteten) Naturmineralien, Hilfsstoffen (z.8. hochdisperse Kieselsäure als Anti-Absetzmittel, Wachse als Trennmittel oder Weichmacher zwecks Einstellung des E-Moduls etc.), Inhibitoren (z.B. 4-Methoxyphenol oder 2,6-Di-tert.-butyl-4-methylphenol) Harter-Komponenten (z.B. Radikalkettenstarter, Amin- und Mercapto-Beschleuniger, wässerige, alkalische Lösungen) und multi-funktionellen Vernetzern enthält.
(II) Umsetzung der Zusammensetzung nach (I) unter Zugabe von Harter-Komponenten (soweit diese noch nicht in der Zusammensetzung nach (I) enthalten sind), ausgewählt aus geeigneten Radikalkettenstartern, geeigneten Beschleunigern, geeigneten Metallhydroxiden und gegebenenfalls (idealerweise deionisiertem) Wasser, in einer Form.
(III)Gegebenenfalls mechanische Bearbeitung des unter (II) erhaltenden Kunstglases bzw. Kunstglaswerkstückes, Kunststoffes bzw. Kunststoffwerkstückes oder Kompositwerk-stoffes bzw. -Werkstückes zwecks endgültiger Formgebung.

### Durchführung der Erfindung

### 1.1. (Meth)acrylate

Verwendung finden in der Regel nicht-funktionelle, aber auch funktionelle (Meth)acrylate.

### 1.1.1. Nicht-funktionelle (Meth)accylate

Als nicht-funktionelle (Meth)acrylate rinden beispielsweise Methyl(mein)acrylat, Ethyl(meth)-acrylat, Propyl(meth)acrylat, n-Butyl(meth)acrylat, i-Butyl(meth)acrylat, n-Haxyl(meth)-acrylat, 2-Ethylhexyl(meth)acrylat, Isodecyl(meth)acrylat, Dodecyl(meth)acrylat, Phenoxyethyl(meth)acrylat, Cyclohexyl-(meth)acrylat, Isobornyl(meth)acrylat, Benzyl(meth)acrylat, Ethylenglycol-nonylphenylether(meth)acrylat, Tripropylenglycolnonylphenylether(meth)acrylat, Tetrahydro-furfuryl(meth)-acrylat, Butyldiglykol(meth)acrylat, (Meth)accylsauce-Additionsprodukt des Butylglycidylethers, (Meth)acrylsäure-Additionsprodukt des Phenylglycidylethers, N-(2-(Meth)acryloylooxyethyDethylenharnstoff, Methoxpolyethylenglykol(meth)-acrylat, Polyethylenglykoldimethacrylat, Ethylenglykoldi-(meth)acrylat, Neopentylglykoldi(meth)acrylat, 1,3-Butandioldi(meth)acrylat, 1,4-Butandioldi(meth)acrylat, 1,6-Hexandioldi(meth)acrylat, 1,12-Dodecanthioldi(meth)acrylat, Stearyl(meth)acrylat, Diethylenglykoldi(meth)acrylat, Triethylen-glykoltri(meth)acrylat, Tetraethylenglykoldimethacrylat, Trimethylolpropantri(meth)acrylat, Dipentolhexa(meth)acrylat, Di(meth)acrylat des Additionsproduktes von Bisphenol A mit Ethylenoxid, (Meth)acryisäure-Additionsprodukt des Bisphenol-A-diglycidylether, Diurethandi(meth)acrylat, Trimethylolpropantri(meth)acrylat, Polyester(meth)acrylate und/oder Melamin(meth)acrylat Verwendung.

### 1.1.2. Funktionelle (Meth)acrylate, die (einen) mit Isocyanatgruppen reaktive(n) Rest(e) aufweisen

Die in der Praxis verwendeten acrylischen Monomere mit Hydroxyl-Funktionalität sind vor allem HydroxyethylacryLat (HEA) und Hydroxypropylacrylat (HPA). Ebenfalls können die entsprechenden weniger toxischen Hydroxyalkylmethacrylate wie 2-Hydroxyethylmethacrylat und 2-Hydroxypropylmethacrylat eingesetzt werden.

Weitere Monoacrylate, die Verwendung finden können sind z.B. Diethylenglycolmono(meth)-acrylat, Polyethylenglycolmono(meth)acrylat, Polypropylenglycol-mono(meth)acrylat sowie das äquimolekulare Reaktionsprodukt aus Glycidyl(meth)acrylat und (Meth)acrylsäure.
Ebenfalls in Frage kommen Polyacrylate wie Trimethyloldiacrylat (TMDA), Trimethylolpropan-di(meth)acrylat bzw. Glycerindi(meth)acrylat oder hydroxylfunktionelle Triacrylate, beispielsweise Pentaerithroltriacrylat (PETA).

Grundsätzlich kommen natürlich auch solche (Meth)acrylatmonomere in Frage, die keine Hydroxylgruppe, dafür aber eine andere nucleophile Gruppe aufweisen, wie z.B. die Carboxy-, Amino-oder Thiol-Gruppe.

Auch in Bezug auf die Hydroxylgruppe multifunktionelle (Meth)acrylate können Verwendung finden, so z.B. das dihydroxy-funktionelle Glycerinmono(meth)acrylat.

### 1.2. Reaktivverdünner

Als Reaktivverdünner können z.B. monofunktionelle wie Isobornylacrylat oder N-Vinyl-pyrrolidon, difunktionelle wie Hexandioldiacrylat (HDDA) oder Tripropylenglycoldiacrylat (TPGDA), als auch tri- bzw. tetrafunktionelle, die eine Erhöhung der Vernetzungsdichte bedingen, wie Trimethylolpropantriacrylat (TMPTA) oder Pentaerythrittetraacrylat (PETA) Verwendung finden.

Die Reaktivverdünner haben zwei wichtige Funktionen. Zum einen reduzieren sie die Viskosität, zum anderen beeinflussen sie stark die physikalischen und chemischen Eigenschaften des jeweilig resultierenden Kompositwerkstoffes bzw. des Werkstückes.

Die Grenzen zwischen den unter 1.1.1. beschriebenen nichtfunktionellen, substituierten (Meth)acrylaten und den hier beschriebenen Reaktivverdünnern sind hierbei fließend.

### 1.3. Poly(meth)acrylate

Als Poly(meth)acrylate kommen Verbindungen wie das Polymethylmethacrylat (PMMA) in Frage; typische kommerzielle Vertreter sind zum Beispiel die Degalan^{®}-Typen der Degussa AG.

### 1.4. Weichmacher

Als Weichmacher kommen Phthalsäureester wie Di-2-ethylhexylphthalat, Trimellitsäureester wie Tri-(2-ethylhexyl)-trimellitat, alliphatische Dicarbonsäureester wie Di-2-ethylhexyladipat, Polymerweichmacher wie Polyester aus Disäuren wie Adipinsäure und Diolen wie 1,4-Butandiol, Phosphorsäureester wie Diphenylkresylphosphat, Fettsäureester wie Triethylenglykol-di-(2-ethylbutyrat), Hydroxycarbonsäureester wie Citronensäureester, Epoxidweichmacher wie epoxidierte Sojaöle und Polyamidweichmacher wie Benzolsulfonamide.

Alternativ kommen auch weichmachende Monomere wie das n-Butyl(meth)acrylat, i-Butyl(meth)acrylat, n-Hexyl(meth)-acrylat, 2-Ethylhexyl(meth)acrylat, Isodecyl(meth)acrylat, Dodecyl(meth)acrylat oder Stearyl(meth)acrylat in Frage.

### 1.5. Inhibitoren

Geeignete Stabilisatoren / Inhibitoren - zwecks Unterbindung einer Polymerisation und somit Erhöhung der Lagerbeständigkeit - sind nachstehend exemplarisch aufgeführt:
1,4-Dihydrobenzol (Hydrochinon, HQ) 4-Methoxihydroxibenzol (Hydrochinonmonomethylether, HQME bzw. MEHQ)
2,6-Di-tert.-butylhydrochinon (DTBHQ)
Phenothiazin (Thiodiphenylamin, PTZ)

Ihr Anteil beträgt bevorzugt 50-1000 ppm bezogen auf das gesamte Stoffgemisch.

### 2. Härter-Komponenten

Als Härterkomponenten kommen die nachstehend aufgeführten Radikalkettenstarter und Reaktionsbeschleuniger, sowie Metallhydroxide und Wasser in Frage. Die Konzentrationen der Härter-Komponenten müssen aufeinander abgestimmt sein.

Jeweils eine dieser Härter-Komponenten kann grundsätzlich auch bereits als Hilfsstoff in den radikalisch härtbaren Stoffgemischen nach 1. enthalten sein, nicht aber in Kombination mit einer anderen Komponente.

Die einzige Ausnahme stellt hier das Wasser dar.

### 2.1. Radikalkettenstarter

Als Radikalkettenstarter eignen sich Peroxide, besonders Keton-Peroxide (z.B. Methylethyl-ketonperoxid, Acetylacetonperoxid und Cyclohexanonperoxid) oder Diacylperoxide (z.B. Dibenzoylperoxid und Dilauroylperoxid), Acylperoxide (z.B. tert.-Butylmonoperoxymaleinat), Perester (z.B. Di-(4-tert.-butylcyclohexyl)-peroxydicarbonat), aber auch Azoverbindungen (z.B. 2,2'Azodiiso-butyronitril oder 2,2'-Azodi-(2-methylbutyronitril)) sind prinzipiell denkbar.

Nachteilig bei den Radikalkettenstartern mit aromatischen Gruppen ist, dass sie oft zu einer Gelbfärbung im Endprodukt, d.h. im Kunstglas / -stoff, Kunstglas- / Kunststoffwerkstück, Kompositwerkstoff bzw. -werkstück führen und dessen Lichtechtheit herabsetzen.

### 2.2. Beschleuniger

### 2.2.1. Amin-Beschleuniger

Als Amin-Beschleuniger kommen insbesondere aromatische Amine wie Dimethylanilin, Diethylanilin und Dimethyl-p-toluidine und aliphatische Amine wie zum Beispiel substituierte Aminoethanole (2-Dibutylamino-ethanol, n-Butyldiethanolamin etc.) oder substituierte Aminosilane (N-Cyclohexyl-3-aminopropyltrimethoxy-silan, 3-Aminopropyltrimethoxysilan, N-Cyclohexylaminomethylmethyldiethoxysilan etc.) jeweils pur oder in Weichmachern in Frage.

Alle Amine eignen sich insbesondere zum Beispiel in Kombination mit Dibenzoylperoxid, Di-(4-tert.-butylcyclohexyl)peroxydicarbonat, Dilauroylperoxid und Dimyristylperoxydicarbonat.

Nachteilig bei den aromatischen Aminen ist, dass sie oft zu einer Gelbfärbung im Endprodukt, d.h. im Kunstglas / -stoff, Kunstglas- / Kunststoffwerkstück, Kompositwerkstoff bzw. - werkstück führen und dessen Lichtechtheit herabsetzen.

Aliphatische Amine hingegen führen nicht zu einer Gelbfärbung und setzen die Lichtechtheit nicht herab; sie sind deshalb bevorzugt mit aliphatischen Radikalkettenstartern einzusetzen, die ebenfalls keine Gelbfärbung und keine Herabsetzung der Lichtechtheit bedingen.

### 2.2.2. Mercapto-Beschleuniger

In Frage kommende Mercapto-Beschleuniger sind zum Beispiel Isooctylmercaptoacetat, Glykoldimercaptoacetat oder auch Zinkthioglykolat.

Diese eignen sich hervorragend insbesondere in Kombination mit tert.-Butylperoxy-maleinsäure.

Mercaptobeschleuniger führen nicht zu einer Gelbverfärbung und reduzieren ebenfalls nicht die Lichtechtheit; verwendet man jedoch zuviel einer solchen Thioverbindung, wirkt sie als Kettenabbrecher.

### 2.3. Metallhydroxide und Wasser

Als Metallhydroxide kommen insbesondere Hydroxide der Alkali- und Erdalkalimetalle wie Calciumhydroxid in Betracht.

Die Metallhydroxide kommen - wenn überhaupt - ausschließlich in Kombination mit einem oder mehreren der anderen Beschleuniger zum Einsatz.

Hierbei können Sie durch Zugabe geringer Mengen an (idealerweise deionisiertem) Wasser aktiviert werden.

Das Wasser kann bereits im Stoffgemisch nach 1. enthalten sein und/oder kann nachträglich alleine oder zusammen mit einem oder mehreren Beschleuniger(n) zugegeben werden.

### 3. Werkstoffe und Werkstücke

Zwecks Herstellung eines Werkstoffes oder eines Werkstückes wird ein radikalisch härtbares Stoffgemisch gemäß 1. mit Härterkomponenten gemäß 2. vermischt und in eine Form gegeben.

Alternativ können die Härterkomponenten partiell oder komplett auch nachträglich zu dem bereits in der Form befindlichen Stoffgemisch gemäß 1. gegeben werden.

Vor der Zugabe des Stoffgemisches gemäß 1. in die Form wären sie dann nur partiell oder eben gar nicht in diesem enthalten.

Die Vorgehensweise hängt hierbei unter anderem von der Geschwindigkeit der radikalischen Polymerisation ab, die durch die Kombination aus Reaktionsinitiator(en) und -beschleuniger bei Raumtemperatur gestartet wird.

Typische Reaktionszeiten, die sich durch Variation der Art und Menge an Härterkompo-nenten einstellen lassen, liegen im Bereich von 3 bis 20 Minuten.

Vorteilhafterweise zeichnen sich die erfindungsgemäßen Stoffgemische gemäß 1. - dank guter Benetzung der Füllstoffe - durch ein sehr gutes Fließverhalten aus, so dass die Beschickung der Form schneller erfolgen kann, als dieses bei den dem Status Quo entsprechenden, vergleichbaren Stoffgemischen auf der Basis MMA / PMMA gegeben ist.

Auch bei relativ kurzen Reaktionszeiten kann das Stoffgemisch gemäß 1. somit noch vor Beschickung der Form mit Härterkomponenten gemäß 2. gemischt werden.

Nach erfolgter Aushärtung, kann der Werkstoff bzw. das entsprechende auf diesem basierende Werkstück der Form entnommen werden und bei Bedarf weiter verarbeitet werden.

### Die Erfindung soll durch folgende nicht einschränkende Beispiele erläutert werden:

1. Herstellung von auf Kunstharz basierenden Kunstglaswerkstücken in der Form von Briefbeschwerern durch Kalthärtung
1.1. Herstellung bzw. Bereitstellung von radikalisch härtbaren Harzzubereitungen
1.1.1. Bereitstellung eines auf Poly(meth)acrylat-urethan-(meth)acrylaten in Urethan(meth)acrylaten und gegebenenfalls (Meth)acrylaten und/oder Reaktivverdünnern basierendes Kunstharzes.

Als Kunstharz findet Askocryl^{®} 2331 / 30 der Ashland-Südchemie-Kernfest GmbH seinen Einsatz.

Es weist bei einem Feststoffgehalt von ca. 70 % (Sartorius Moisture Analyzer, 2g, 135°C, 15 min.) eine Höppler-Viskosität nach DIN 53015 von ca. 2.500 mPa.s bei 25 °C auf und enthält ca. 70 % einer Mischung aus reaktivem Polymer und Urethanmethacrylat, sowie ca. 30 % Methylmethacrylat.

Seine Synthese erfolgt in Anlehnung an die in der DE-Patentanmeldung 10 2005 004 639.8 unter Beispiel A beschriebene.

### 1.1.2. Herstellung eines Sirups

80 kg Methyl(meth)acrylat werden vorgelegt. Luft wird durch das Methylmethacrylat geleitet. Unter Rühren und unter Luftzufuhr wird das Methylmethacrylat auf 50 °C erwärmt. 20 kg eines Acrylcopolymers auf Basis PMMA (enthaltene Monomerbausteine: Methylmethacrylat und Ethylacrylat) mit einer durchschnittlichen Partikelgröße von 600 µm gemäß Siebtest, einer Dichte nach ISO 1183 von 1,18 g / cm³ und einem Vicat-Erweichungspunkt von 118 °C nach ISO 306 A bzw. von 109 °C nach ISO 306 B wird im 50 °C warmen Methylmethacrylat gelöst und hierzu portionsweise unter Rühren zugegeben.

Der so erhaltene Sirup, d.h. die Lösung von 20 kg Acrylcopolymer in 80 kg Methylmethacrylat wird auf Raumtemperatur abgekühlt und dann die Luftzufuhr abgestellt.

Bei 20 °C mißt man am Brookfield-Viskosimeter nach ISO 2555 eine Viskosität von ca. 280 mPa.s.

### 1.1.3. Herstellung eines radikalisch härtbaren Stoffgemisches

55,28 kg Kunstharz gemäß 1.1. und 40,2 kg Sirup gemäß 1.2. werden miteinander gemischt. Bei 20 °C misst man am Brookfield-Viskosimeter nach ISO 2555 eine Viskosität von ca. 475 mPa.s.

### 1.2. Fertigung von Werkstücken

### 1.2.1. Fertigung unter Einsatz des Kunstharzes gemäß 1.1.1. (mit der Härter-Korbination Peroxid, Mercaptan und alkalische Lösung, ohne PMMA) (Vergleichsbeispiel)

Bei Raumtemperatur und unter Rühren gibt man zu 204,5 g des Kunstharzes gemäß 1.1.1. nacheinander 8,2 g tert.-Butylpermaleinat (25 %ige Pastenpräparation in einem Weichmacher), 1,0 g Calciumhydroxid, 1,3 g Wasser und 0,4 g einer 10 %igen Lösung von Isooctylmercaptoacetat in Ethylenglykol.

Zur Homogenisierung und zur Entlüftung rührt man zwei Minuten unter Vakuum und gießt dann in eine flache, quaderförmige Form (11,5 cm x 6, 5 cm x 2,0 cm), in der die Kalthärtung erfolgt. Als maximale Temperatur beobachtet man lediglich 110 °C und das erst nach 15 min.

Das farblose, quaderförmige Werkstück in der Form eines Briefbeschwerers zeichnet sich dadurch aus, dass es lichtecht (keine visuell wahrnehmbare Vergilbung nach einer Belastung über 240 h gemäß ISO 2809 im QUV Accelerated Weathering Tester der Fa. Q-Lab Corporation) und gänzlich frei von Blasen, Lunkern, Poren und Rissen ist.

Infolge der schlechten Aushärtung sind die mechanischen Eigenschaften, gemessen auf einer Zwick Materialprüfmaschine 1425 unter Einsatz von Prüfkörpern mit den Abmessungen 6 mm x 10 mm x 100 mm, sehr bescheiden.

So weist es nur ein E-Modul nach ISO 527 von 1993 MPa, eine geringe Dehnung nach ISO 37 von 0,65 % und eine niedrige Biegefestigkeit nach ISO 178 von 36 N auf.
Zudem ist der Werkstoff nicht transparent, sondern trübe.

### 1.2.2. Fertigung unter Einsatz des radikalisch härtbaren Stoffgemisches gemäß 1.1.3. (mit der Härter-Kombination Peroxid, Mercaptan und alkalische Lösung, mit PMMA) (erfindungsgemäßes Beispiel)

Bei Raumtemperatur und unter Rühren gibt man zu 203,2 g des radikalisch härtbaren Stoffgemisches gemäß 1.1.3. nacheinander 8,2 g tert.-Butylpermaleinat (25 %ige Pastenpräparation in einem Weichmacher), 1,0 g Calciumhydroxid, 1,3 g Wasser und 0,4 g einer 10 %igen Lösung von Isooctylmercaptoacetat in Ethandiol.

Zwecks Homogenisierung und zur Entlüftung rührt man zwei Minuten unter Vakuum und gießt dann in eine flache, quaderförmige Form (11, 5 cm x 8,5 cm x 2,0 cm), in der die Kalthärtung erfolgt.

Als maximale Temperatur beobachtet man bereits nach 9 Minuten 130 °C.

Das farblose, quaderförmige Werkstück in der Form eines Briefbeschwerers zeichnet sich
dadurch aus, dass es lichtecht (keine visuell wahrnehmbare Vergilbung nach einer Belastung über 240 h gemäß ISO 2809 im QUV Accelerated Weathering Tester der Fa. Q-Lab Corporation) und gänzlich frei von Blasen, Lunkern, Poren und Rissen ist.

Zudem weist es gute mechanische Eigenschaften, gemessen auf einer Zwick Material-prüfmaschine 1425 unter Einsatz von Prüfkörpern mit den Abmessungen 6 mm x 10 mm x 100 mm, auf, d.h. ein E-Modul nach ISO 527 von 2427 MPa, eine Dehnung nach ISO 37 von 2,6 % und eine Biegefestigkeit nach ISO 178 von 150 N.

Hinzu kommt eine hohe chemische Beständigkeit, wie sich der nachstehenden Tabelle entnehmen lässt, und zwar insbesondere gegenüber nicht halogenierten organischen Lösungsmitteln (Aliphaten, Aromaten, Ester usw.), Wasser, verdünnten Säuren (Ameisensäure [10%], Salzsäure [5%], Salpetersäure [10%], Phosphorsäure [10%], Schwefelsäure [10%] usw.) und Alkalien (Natronlauge usw.).

| Gewichtsabnahme | Chemikalien |
|---|---|
| < 0,1 % | Solvesso 100, Toluol, Butylacetat, n-Butanol |
| | Verd. Säuren: HCOOH [10%], HCl [5%], HNO₃ [10%], H₃PO₄ [10%], H₂SO₄ [10%] |
| < 0,2 % | Konz. Säuren: rauchende Salzsäure, Phosphorsäure [85%] |
| | Wasser, Natronlauge [30%] |
| < 0,5 % | Ethanol |
| < 5,0 % | Aceton, Vitriolöl |
| < 10 % | Ameisensäure |
| < 15 % | Rauchende Salpetersäure |
| 100 % | Chloroform, Dichlormethan |

| | |
|---|---|
| HCOOH = Ameisensäure, HCl = Salzsäure, HNO₃ = Salpetersäure, H₃PO₄ = Phosphorsäure, [%] = Konzentration der Lösung | |

Hierbei dient in der Tabelle als Maß für die chemische Beständigkeit die Gewichtsabnahme von Prüfkörpern mit den Abmessungen 75 mm x 16 mm x 10 mm nach 24 h Lagerung in ausgewählten Chemikalien.

Außerdem verhält sich das Werkstück bei Wärmezufuhr thermoplastisch.
Ein 11 mm dicker Prüfling aus diesem Kunstglas lässt sich bei 100 °C schwer verbiegen, bei 120 °C leicht. Eine gegebene Verformung bleibt nach Abkühlen erhalten.

Nachteilig ist, dass das Werkstück - wie auch das unter 1.2.1. - nicht transparent ist, sondern trübe.

### 1. 2. 3. Fertigung, unter Einsatz des Kunstharzes gemäß 1.1.3. (mit aromatischem Radikalkettenstarter und aromatischem Amin, mit PMMA) (erfindungsgemäßes Beispiel)

Bei Raumtemperatur und unter Rühren gibt man zu 102,25 g des radikalisch härtbaren Stoffgemisches gemäß 1.1.3. 0,82 g zerkleinertes N,N-Di-(2-hydroxy-ethyl)-p-toluidin und hält zwei Stunden unter Rühren, bis sich alles gelöst hat, unter Erhalt von Komponente A.

Ebenfalls zu 102,25 g des radikalisch härtbaren Stoffgemisches gemäß 1.1.3. fügt man 3,07 g 75 % iges Dibenzoylperoxid (phlegmatisiert in Wasser) hinzu und rührt diese Mischung 10 min., so dass sie homogen ist, unter Erhalt der Komponente B. Komponente A und Komponente B werden hierauf miteinander vermischt.

Um wiederum eine homogene Mischung zu erhalten und zwecks Entlüftung rührt man zwei Minuten unter Vakuum und gießt dann in eine flache quaderförmige Form (11,5 cm x 8,5 cm x 2,0 cm), in der die Kalthärtung erfolgt.

Als maximale Temperatur beobachtet man bereits nach 9 min. 160 °C.

Das transparente, quaderförmige Werkstück in der Form eines Briefbeschwerers zeichnet sich dadurch aus, dass es gänzlich frei von Blasen, Lunkern, Poren und Rissen ist.
Zudem weist es gute mechanische Eigenschaften, gemessen auf einer Zwick Material-prüfmaschine 1425 unter Einsatz von Prüfkörpern mit den Abmessungen 5,3 mm x 10 mm x 100 mm auf, d.h. ein E-Modul nach ISO 527 von 2485 MPa, eine Dehnung nach ISO 37 von 1,45 % und eine Biegefestigkeit nach ISO 178 von 68 N, sowie hohe chemische

Beständigkeiten, insbesondere gegenüber nicht halogenierten organischen Lösungsmitteln (Aliphaten, Aromaten, Ester usw.), Wasser, verdünnten Säuren (Ameisensäure [10%], Salzsäure [5%], Salpetersäure [10%], Phosphorsäure [10%], Schwefelsäure [10%] usw.) und Alkalien (Natronlauge usw.).

Bei Wärmezufuhr verhält sich das Werkstück thermoplastisch. Ein 11 mm dicker Prüfling aus diesem Kunstglas lässt sich bei 100 °C schwer verbiegen, bei 120 °C leicht. Eine gegebene Verformung bleibt nach Abkühlen erhalten.

Nachteilig ist, dass das Werkstück eine starke Gelbfärbung aufweist und zudem nicht lichtbeständig (visuell wahrnehmbare Vergilbung nach einer Belastung über 240 h gemäß ISO 2809 im QUV Accelerated Weathering Tester der Fa. Q-Lab Corporation) ist.

Das enthaltene PMMA bedingt eine geringfügige Trübung.

### 1.2.4. Fertigung unter Einsatz des Kunstharzes gemäß 1.1.1. (mit aliphatischem Radikalkettenstarter und Amin, ohne Polymethylmethacrylat) (Vergleichsbeispiel)

Bei Raumtemperatur und unter Rühren gibt man zu 102,25 g des Kunstharzes gemäß 1.1.1. 3,48 g 95 %iges Di-(4-tert.-butyl-cyclohexyl)-peroxydicarbonat in Pulverform und rührt eine Stunde, bis sich alles gelöst hat, unter Erhalt der Komponente A.

Ebenfalls zu 102,25 g des Kunstharzes gemäß 1.1.1. gibt man 1,03 g 2-Dibutylamino-ethanol und rührt diese Mischung 10 min., so dass sie homogen ist, unter Erhalt der Komponente B. Komponente A und Komponente B werden hierauf miteinander vermischt.

Um wiederum eine homogene Mischung zu erhalten und zwecks Entlüftung, rührt man zwei Minuten unter Vakuum und gießt dann in eine flache quaderförmige Form (11,5 cm x 8,5 cm x 2,0 cm), in der die Kalthärtung erfolgt.

Als maximale Temperatur beobachtet man bereits nach 12 min. 124 °C.

Das transparente, glasklare und ebenfalls farblose, quaderförmige Werkstück in der Form eines Briefbeschwerers zeichnet sich dadurch aus, dass es lichtbeständig (keine visuell wahrnehmbare Vergilbung nach einer Belastung über 240 h gemäß ISO 2809 im QUV Accelerated Weathering Tester der Fa. Q-Lab Corporation), sowie gänzlich frei von Blasen, Lunkern, Poren und Rissen ist.

Zudem weist es gute mechanische Eigenschaften, gemessen auf einer Zwick Materialprüfmaschine 1425 unter Einsatz von Prüfkörpern mit den Abmessungen 6 mm x 10 mm x 150 mm auf, d.h. ein E-Modul nach ISO 527 von 2790 MPa, eine Dehnung nach ISO 37 von 0,78 % und eine Biegefestigkeit nach ISO 178 von 54 N, sowie hohe chemische Beständigkeiten, insbesondere gegenüber nicht halogenierten organischen Lösungsmitteln (Aliphaten, Aromaten, Ester usw.), Wasser, verdünnten Säuren (Ameisensäure [10%], Salzsäure [5%], Salpetersäure [10%], Phosphorsäure [10%], Schwefelsäure [10%] usw.) und Alkalien (Natronlauge usw.).

Bei Wärmezufuhr verhält sich das Werkstück thermoplastisch.
Ein 11 mm dicker Prüfling aus diesem Kunstglas lässt sich bei 100 °C schwer verbiegen, bei 120 °C leicht. Eine gegebene Verformung bleibt nach Abkühlen erhalten.

### 1.3. Zusammenfassung der Kenndaten der unter 1.2. beschriebenen Werkstücke

| | | | | |
|---|---|---|---|---|
| Werkstück nach | 1.2.1 | 1.2.2. | 1.2.3. | 1.2.4. |

| Zusammensetzung der gehärteten Mischungen | | | | |
|---|---|---|---|---|
| Härter-Kombi | PM Ca(OH)₂IOMA | PM Ca(OH)₂IOMA | BP DHET | BCHP DBAE |
| Enthält PMMA? | nein | ja | ja | nein |

| Visueller Eindruck | | | | |
|---|---|---|---|---|
| Keine Gelbfärbung? | ja | ja | nein | ja |
| Lichtecht? | ja | ja | nein | ja |
| Transparent? | nein | nein | ja ** | ja |

| Physikalische Kenndaten | | | | |
|---|---|---|---|---|
| E-Modul [MPa] | 1993 | 2427 | 2485 | 2790 |
| Dehnung [%] | 0, 65 | 2,6 | 1,45 | 0,78 |
| Biegefestigkeit [N] | 36 | 150 | 68 | 54 |

| | | | | |
|---|---|---|---|---|
| PM Ca(OH)₂IOMA = tert.-Butylpermaleinat, Calciumhydroxid, Wasser und Isooctylmercaptoacetat BP = Dibenzoylperoxid, N,N-Di-(2-hydroxy-ethyl)-p-toluidin BCHP = Di-(4-tert.-butyl-cyclohexyl)-peroxydicarbonat und 2-Dibutylamino-ethanol PMMA = Polymethylmethacrylat * = keine visuell wahrnehmbare Vergilbung nach einer Belastung über 240 h gemäß ISO 2809 im QUV Accelerated Weathering Tester der Fa. Q-Lab Corporation ** = geringfügige Trübung bedingt durch das enthaltene PMMA E-Modul nach ISO 527, Dehnung nach ISO 37, Biegefestigkeit nach ISO 178 | | | | |

### 2. Herstellung eines Kunstharz- und Quarz-basierenden Kompositwerkstückes in Spülenform durch Kalthärtung

### 2.1. Herstellung eines radikalisch härtbaren, gefüllten Stoffgemisches

55,28 kg Kunstharz gemäß 1.1.1., 40,20 kg Sirup gemäß 1.1.2. werden miteinander gemischt.

Hierzu gibt man 95,48 kg Cristobalitmehl SF 3000 der Quarzwerke GmbH (mittlere Korngröße: 7 µm, obere Korngröße: 24 µm) und 0,5 kg Titandioxidpaste (50 %ig im radikalisch härtbaren Stoffgemisch gemäß 1.3.) und mischt erneut.

Bei 20 °C misst man am Viskomat NT der Fa. Schleibinger Geräte Teubert und Greim GmbH in Anlehnung an EN ISO 3219 bzw. an DIN 53019 mit einem Leimpaddel eine Viskosität von ca. 1,4 Pa.s.

### 2.2. Fertigung eines Werkstückes

Bei Raumtemperatur und unter Rühren gibt man zu 47,74 kg des radikalisch härtbaren Stoffgemisch gemäß 2.1. 0,48 kg zerkleinertes N,N-Di-(2-hydroxy-ethyl)-p-toluidin und rührt zwei Stunden unter Erhalt von Komponente A.

Ebenfalls zu 47,74 kg des radikalisch härbaren Stoffgemisches fügt man 1,91 kg 75 %iges Dibenzoylperoxid (phlegmatisiert in Wasser) hinzu und rührt diese Mischung 10 min., so dass sie homogen ist, unter Erhalt der Komponente B. Komponente A und Komponente B werden hierauf miteinander vermischt. Zwecks Homogenisierung und zur Entlüftung rührt man fünf Minuten unter Vakuum. Die Beschickung einer Spülen-Form erfolgt danach umgehend innerhalb von 70 Sekunden. In der Form erfolgt die Kalthärtung. Nach zehn Minuten kann die fertige Spüle der Form entnommen werden.

Ebenso wie eine heißgehärtete Askocryl^{®}-basierende Spüle gemäß DE 10 2005 004 639.8 zeichnet sie sich durch einen hohen Glanz, eine hohe Brillianz, einen tiefen Farbton, eine ruhige Oberfläche, die Abwesenheit von Rissen und gute mechanische Eigenschaften, gemessen auf einer Zwick Materialprüfmaschine 1425 unter Einsatz von Prüfkörpern mit den Abmessungen 6 mm x 10 mm x 100 mm, d.h. ein E-Modul nach ISO 527 von 7830 MPa, eine Dehnung nach ISO 37 von 0,46 % und eine Biegefestigkeit nach ISO 178 von 90 N, sowie hohe chemische Beständigkeiten, d.h. man beobachtet man z.B. beim Heiß-Kalt-Wasser-Wechseltest (15°C / 90°C) nach 500 Zyklen keinerlei Risse oder Aufhellung des Farbtons. Zudem finden sich keinerlei Blasen, Lunker, Poren und Risse.

## Patentansprüche

1. Radikalisch härtbare Zusammensetzung, basierend auf Poly(meth)acrylat-urethan(meth)acrylaten in Urethan(meth)acrylat, erhältlich durch:
a) Bereitstellen von (Meth)acrylatmonomeren,
b) Polymerisieren der (Meth)acrylatmonomeren zu einem Po-ly(meth)acrylat,
c) Umsetzen des Poly(meth)acrylats mit einer Isocyanatverbindung, die mehr als eine Isocyanatgruppe aufweist,
d) Umsetzen der in c) enthaltenen Zusammensetzung mit (Meth)acrylatmonomeren,
e) Initiieren einer radikalische Polymerisation in Gegenwart einer geeigneten Menge von Poly(mech)acrylat.

2. Radikalisch härtbare Zusammensetzung nach Anspruch 1, **dadurch gekennzeichnet, dass** weiter ein Härter zugegeben wird, der ein Peroxid, ein Thiol und eine alkalische Lösung umfasst.

3. Radikalisch härtbare Zusammensetzung nach Anspruch 2, **dadurch gekennzeichnet, dass** als Peroxid Peroxidtertbutylpermaleat verwendet wird.

4. Radikalisch härtbare Zusammensetzung nach einem der vorherigen Ansprüche, **dadurch gekennzeichnet, dass** sie durch radikalische Polymerisation bei Temperaturen von weniger als 40°C gehärtet wird.

5. Radikalisch härtbare Zusammensetzung gemäß Anspruch 4, die zusätzlich, einen multifunktionellen Vernetzer umfasst.

6. Verwendung einer radikalisch härtbaren Zusammensetzung gemäß einem der vorhergehenden Ansprüche zur Herstellung eines Kompositwerkstoffs, Kompositwerkstücks oder Lacks.

7. Kompositwerkstoff oder Kompositwerkstück, umfassend eine radikalisch härtbare Zusammensetzung gemäß einem der Ansprüche 1 bis 5 in gehärteter Form.

8. Verfahren zur Herstellung eines Kompositwerkstoffs oder Kompositwerkstücks gemäß Anspruch 7, wobei die Härtung ohne Anwendung von wärme oder Hitze von mehr als 40°C erfolgt.

## Claims

1. Radically curable composition, based on poly(meth)acrylate-urethane(meth)acrylates in urethane (meth)acrylate, obtainable by:
a) providing (meth)acrylate monomers,
b) polymerizing the (meth)acrylate monomers to a poly(meth)acrylate,
c) reacting the poly(meth)acrylate with an isocyanate compound which has more than one isocyanate group,
d) reacting the composition contained in c) with (meth)acrylate monomers,
e) initiating a radical polymerization in the presence of a suitable quantity of poly(meth)acrylate.

2. Radically curable composition according to claim 1, **characterized in that** a curing agent is further added which comprises a peroxide, a thiol and an alkaline solution.

3. Radically curable composition according to claim 2, **characterized in that** peroxide tertbutylpermaleate is used as peroxide.

4. Radically curable composition according to one of the previous claims, **characterized in that** it is cured by radical polymerization at temperatures of less than 40°C.

5. Radically curable composition according to claim 4 which additionally comprises a multifunctional cross-linker.

6. Use of a radically curable composition according to one of the preceding claims for the production of a composite material, composite workpiece or lacquer.

7. Composite material or composite workpiece, comprising a radically curable composition according to one of claims 1 to 5 in cured form.

8. Method for the production of a composite material or composite workpiece according to claim 7, wherein the curing takes place without the application of warmth or heat of more than 40°C.

## Revendications

1. Composition à durcissement radicalaire, à base de poly(méth)acrylate-uréthane(méth)acrylates dans de l'uréthane(méth)acrylate, pouvant être obtenue par
a) Mise à disposition de monomères de (méth)acrylate,
b) Polymérisation des monomères de (méth)acrylate en un poly(méth)acrylate,
c) Transformation du poly(méth)acrylate avec un composé isocyanate qui comporte plus d'un groupe isocyanate,
d) Transformation de la composition contenue dans c) avec des monomères de (méth)acrylate,
e) Initiation d'une polymérisation radicalaire en présence d'une quantité adaptée de poly(méth)acrylate.

2. Composition à durcissement radicalaire selon la revendication 1, **caractérisé en ce qu'**on ajoute par ailleurs un durcisseur qui comprend un peroxyde, un thiol ou une solution alcaline.

3. Composition à durcissement radicalaire selon la revendication 2, **caractérisée en ce qu'**en tant que peroxyde, on utilise un permaléate de tert-butyle de peroxyde.

4. Composition à durcissement radicalaire selon l'une quelconque des revendications précédentes, **caractérisée en ce qu'**on la durcit par polymérisation radicalaire à des températures inférieures à 40°C.

5. Composition à durcissement radicalaire selon la revendication 4, qui comprend en supplément un agent réticulant multifonctionnel.

6. Utilisation d'une composition à durcissement radicalaire selon l'une quelconque des revendications précédentes, pour la fabrication d'une matière composite, d'une pièce d'oeuvre composite ou de laques.

7. Matière composite ou pièce d'oeuvre composite, comprenant une composition à durcissement radicalaire selon l'une quelconque des revendications 1 à 5 sous forme durcie.

8. Procédé de fabrication d'une matière composite ou d'une pièce d'oeuvre composite selon la revendication 7, le durcissement s'effectuant sans utilisation d'une chaleur supérieure à 40°C.
